Europäisches Patentamt

European Patent Office

Office européen des brevets

(11) Publication number: **0 322 479 B1**

## EUROPEAN PATENT SPECIFICATION

(45) Date of publication of patent specification: **30.09.92**

(51) Int. Cl.⁵: **B23K 26/18**, B44C 1/22, C03C 23/00

(21) Application number: **87119388.4**

(22) Date of filing: **30.12.87**

(54) Method and apparatus for the selective creation of a decor on hollow axially symmetrical articles by means of a laser beam.

(43) Date of publication of application:
**05.07.89 Bulletin 89/27**

(45) Publication of the grant of the patent:
**30.09.92 Bulletin 92/40**

(84) Designated Contracting States:
**DE GB IT**

(56) References cited:
**DD-A- 112 941**
**GB-A- 1 138 556**
**US-A- 3 701 880**
**US-A- 3 770 936**
**US-A- 4 546 231**

**PATENT ABSTRACTS OF JAPAN, vol. 5, no. 143 (M-87)[815], 9th September 1981; & JP - A - 56 74393 (TOKYO SHIBAURA DENKI K.K.) 19-06-1981**

**idem**

(73) Proprietor: **Vyskumny a vyvojovy ustav sklár-sky Vyskumná a vyvojová organizácia UI. SNP 20**
91250 Trencin(CS)

(72) Inventor: **Urbanek Peter Dipl.Ing.**
**M.Uhra 38**
**Trencin(CS)**
Inventor: **Farkas Peter Dipl.Ing.**
**UI.1.maja 4**
**Trencin(CS)**
Inventor: **Cvopa Rudolf**
**F.Zmacenka 36/28**
**Trencin(CS)**
Inventor: **Faskova Maria**
**UI.MPCL 81/7**
**Banska Bystrica(CS)**
Inventor: **Drbohlav Jaroslav**
**U Lip 177**
**Turnov(CS)**

(74) Representative: **Patentanwälte Beetz sen. - Beetz jun. Timpe - Siegfried - Schmitt-Fumian**
**Steinsdorfstrasse 10**
**W-8000 München 22(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to a method and an apparatus for the selective creation of a decor on hollow, axially symmetrical articles by means of a laser beam.

Methods and devices for working axially symmetrical glass articles by means of a laser beam are known from DD-A-112 941, US-A-3 770 936 and 3 701 880 and CS-author's certificate 214 081. These known methods are, from the point of view of working, based on the principle of a sufficient absorption of glass for a certain wavelength of a laser beam.

A drawback of these prior art methods and devices is to be seen in the circumstance that the laser heat energy does not pass through the glass mass, is absorbed within the thin glass surface layer, and the required decor is created on the glass surface by local evaporation of the thin glass layer, which leads to the formation of microcracks. Further drawbacks of the known methods and devices are the necessity of applying the laser heat energy on the axially symmetrical article from the external side, the need for a centric clamping and rotation of the axially symmetrical article around the axis of symmetry, and accordingly a practically rather demanding manipulation of these articles.

It is the object of this invention to overcome substantially the above-mentioned drawbacks hitherto involved with the creation of a decor on hollow, axially and particularly rotationally symmetrical articles by means of a laser beam and to provide a method and an apparatus which can be applied to hollow, axially and particularly rotationally symmetrical articles comprising two layers, where the internal layer is made from a material of a maximum thickness of 40 mm and has a maximum absorption coefficient of 29 %, and the external layer is made from a material of a maximum thickness of 1,2 mm with a minimum absorption coefficient of 75 %, whereby said limits of absorption coefficients are considered at wavelengths of 0,5 to 2,0 $\mu$m.

This object is achieved according to claims 1 and 5. The dependent claims relate to prefered embodiments.

The method according to the invention for the selective creation of a decor on hollow, axially and preferably rotationally symmetrical articles by means of a laser beam, where the hollow article consists of two layers, an internal layer consisting of a material of a maximum thickness of 40 mm with a maximum absorption coefficient of 29 % and an external layer consisting of a material of a maximum thickness of 1,2 mm with a minimum absorption coefficient of 75 %, is characterised in that

- a laser of a wavelength of 0,5 to 2,0 $\mu$m is used,
- the propagation axis of the laser beam is adjusted to coincide with the axis of symmetry of the hollow article with a maximum allowance of ± 10 mm,
- the laser beam is directed from the interior of the hollow article through the internal layer to the external layer of the hollow article in order to achieve a phase change at the irradiated sites of the external layer, and
- the laser beam is moved rotationally around the axis of symmetry and longitudinally along the axis of symmetry of the hollow article.

According to a prefered embodiment, the laser beam is controlled by a optical-mechanical system which performs on the external layer of the hollow article a combined movement of the laser beam consisting of a rotational movement around the axis of symmetry of the hollow article according to the equation

$$x^2(z) + y^2(z) = r_1^2(z)$$

and of a translatory movement in the direction of the axis of symmetry of the hollow article according to the equation

$$z = f(t),$$

wherein are:

| | |
|---|---|
| $x(z)$ and $y(z)$ | the x-coordinate or the y-coordinate, respectively, of the interaction site of the laser beam with the external layer of the hollow article in the plane z in a rectangular cartesian coordinate system, |
| $r_1(z)$ | the radius of the internal wall of the external layer in the plane z, and |
| $f(t)$ | a function increasing with time, |

and the center of the stand or support of the article is the origin of the coordinate system.

The apparatus according to the invention for carrying out the above method comprises a laser, a focusing lens and a mirror arranged in the propagation axis of the laser beam; it is characterised in that

- the mirror is arranged in the optical axis of the lens,
- a support carrying the mirror is provided which is designed to be inserted into a hollow article and to be adjusted such that the optical axis of the lens coincides with the axis of symmetry of the hollow article within a predetermined accuracy with the axis of symmetry, preferably its rotational axis, and which is rotatable around and shiftable along the axis of symmetry of the hollow article, so that the mirror is longitudinally or translatorily movable along and rotationally movable around the optical axis of the lens,

- the support is provided with driving means for the translatory movement, and
- the lens is provided with focusing means fixed to the support,
- the mirror and the lens being independently longitudinally movable.

According to prefered embodiments, the control of the creation of the decor is secured by an optical pick-up device picking up a sample of the decor to be applied, and/or by a microcomputer.

The main advantages of the method and apparatus according to the invention for creating a decor on hollow, axially symmetrical articles by means of a laser beam reside in that the laser beam passes through the material of the internal layer of the wall of the hollow article without damaging said material and causes in the material of the external layer of the wall a phase change of said material. An additional practical advantage is also the possibility of a complete automation of the process, as the article to be decorated does not need to be rotated in the course of the proper process around, its axis of symmetry, and accordingly, there is no need for clamping the articles by any clamping means, which can freely stand on a stable support without rotation. This advantage is of extraordinary importance in case articles to be decorated have no ideal shape (deviations in diameter, excentricity, axial deviation, ellipticity etc.).

The selectivity of the method according to this invention is due to the fact that so to speak the laser heat energy is itself selectively choosing where it has to cause a phase change of the material and where no such change has to be made according to the dependence of the absorption coefficients of the different materials on the wavelength of the used laser beam.

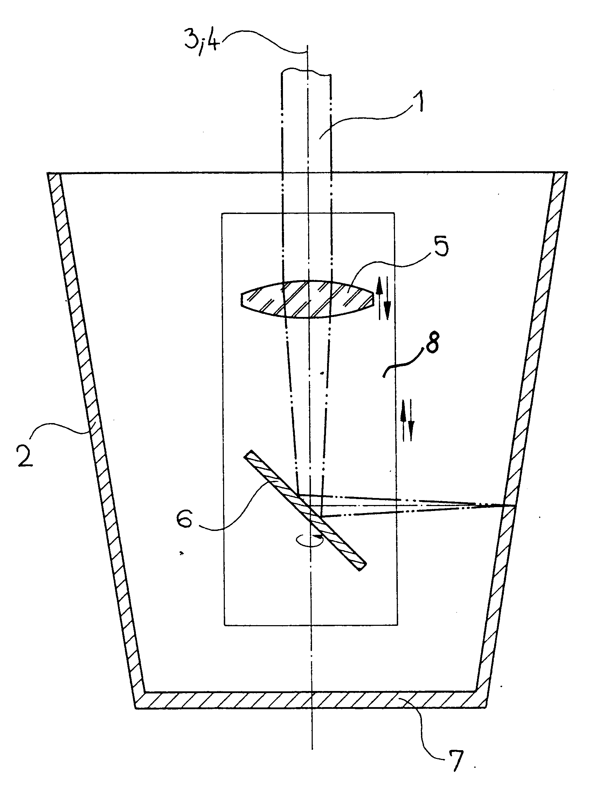

The concept of this invention will now be more clearly described with reference to an exemplary embodiment for decoration of utility glass by means of a laser beam in connection with the attached drawing schematically showing the principle of an apparatus according to the invention in elevation for explaining the action of a laser beam on the article to be decorated.

The method may be applied to hollow, axially symmetrical articles consisting of two layers, the internal layer thereof being formed of clear glass. Clear glass is generally optically well permeable within wavelengths of 0,5 to 2,0 $\mu$m, i. e., the absorption coefficient of clear glass is lower than 29 %. As an example, a laser beam generated by a solid state Nd/YAG laser (including an acousto-optical Q-shutter) may be used. The hollow, axially and rotationally symmetrical glass article is for instance a small cup, a cup, a vase, an ash tray or some other kind of utility glass. These glass articles may have been refined on the external mantle by the classical methods of transparent coating, listering, application of glass colours or of layers of precious metals, i. e., the articles consist of two layers: clear glass - transparent coating, or clear glass-lister, or clear glass - glass colour, or clear glass - layer of precious metal. The thin layer of the external mantle has a thickness of $\leq$ 1,2 mm, and the absorption coefficient of the material of this layer for the wavelength of the Nd/YAG laser is $\geq$ 75 %.

The laser beam applied in coincidence with the axis of symmetry of the hollow article with a maximum allowance of $\pm$ 10 mm is controlled mechano-optically and is acting from the interior of the hollow article to its external layer, i. e., it passes through the clear glass to the thin layer of the external mantle of transparent coating, lister, glass colour or precious metal. The laser beam does not evaporate the material of the internal layer, nor does it damage it or create microcracks in this material. In the case of glass, for instance, the laser beam does not evaporate clear glass, causes no visual damage to it nor does it create microcracks in the glass. On the other hand, the laser beam causes in the course of its penetration from the interior a phase change of the external layer of the hollow article, i. e., it causes after passage through the clear glass evaporation of the thin layer of the external mantle consisting of transparent coating, lister, glass colour or precious metal.

The laser beam controlled by an opto-mechanical system performs over the internal layer of the hollow article a combined movement consisting of a rotational movement around the axis of symmetry of the hollow article according to the equation

$$x^2(z) + y^2(z) = r_1^2(z)$$

and a movement in the direction of the axis of symmetry of the hollow article according to the equation

$$z = f(t)$$

as defined above, wherein $r_1(z)$ is the radius of the internal wall of the external layer of transparent coating, lister, glass colour or precious metal on the clear glass article in the plane z, and the center of the support of the article coincides with the origin of the system coordinates.

The apparatus schematically shown in the drawing comprises a laser generating a laser beam 1, a lens 5, a mirror 6 and driving means for a translatory movement of the lens 5 and of the mirror 6 and for a rotational movement of the mirror 6, which can be mounted on a support 8, and an opto-electronic or electronic control for generating the decor, which is secured by an optical pick-up device of the respective decor sample and/or by a microcomputer. In the attached drawing solely the part of the whole apparatus is shown which relates to the concept of this invention. The axially and rotationally symmetrical article 2 where the decor has to be made consists of a material with two layers and stands in the course of decoration on its base plane 7 on a stable base or holder. The article 2 does not turn around its axis of symmetry in the course of decor formation.

The laser beam 1 of a wavelength of 0,5 to 2,0 μm is applied in coincidence with the axis of symmetry 3 of the article with a maximum allowance of ± 10 mm. The laser beam 1 is focussed by the lens 5 which is supported on a support 8 in a sliding fashion in the direction of the axis 3 of symmetry of the article 2, and the optical axis 4 of the lens 5 is coinciding with the axis of symmetry 3 within an allowance of ± 10 mm. The mirror 6 is slidingly and rotatably arranged in the axis of symmetry 3 of the hollow article.

The driving means for the translatory and rotational movements secure the movement of the lens 5 and of the mirror 6 in the direction of the axis of symmetry 3 of the article 2, the movement of the lens 5 with respect to the mirror 6 so that the focus of the lens remains always on the external surface of the mantle of the article 2, and also the rotation of the mirror 6, whereby the axis of rotation of the mirror 6 coincides with the axis of symmetry 3 of the article 2.

The concept according to this invention allows to create decors on the article 2 by a phase change of the external layer of its mantle according to the above defined equations.

The laser beam 1 can be interrupted by means of an external electronic signal comprising information about the sample of the decor. According to a prefered embodiment, a continuous solid state Nd/YAG laser with an acousto-optical Q shutter is used.

For securing the control of the laser beam in accordance with the sample of the decor preferably an optical pick-up device of a sample of the decor and/or a microcomputer are used. The optical pick-up device of the decor sample operates in a manner similar to telephoto transmission, and the obtained electronic signals are used to control on line the laser beam 1.

The broadest possibilities of application of the method and apparatus according to this invention are in the glass industry. It is an advantage that clear glass has a low absorption coefficient within the wavelength range of 0,5 to 2,0 μm, and, on the other hand, the thin layer of transparent coating, lister, glass colour or precious metals has a high absorption coefficient within the above-mentioned wavelength range. The decoration effect created by the phase change of the thin external layer on clear glass obtained according to this invention is of high quality. Furthermore, many sortiments of decors or markings can be selected and quickly changed according to the requirements of clients without any detrimental effect on the economy or the performance of the apparatus.

Other possibilities for applying the method and apparatus according to this invention are the creation of a decor or of grids on hollow, axially symmetrical articles both on the external and the internal layer of the mantle of the article where the laser beam is acting from the interior of the article.

**Claims**

1. A method for the selective creation of a decor on hollow, axially and preferably rotationally symmetrical articles by means of a laser beam, where the hollow article consists of two layers, an internal layer consisting of a material of a maximum thickness of 40 mm with a maximum absorption coefficient of 29 % and an external layer consisting of a material of a maximum thickness of 1,2 mm with a minimum absorption coefficient of 75 %,
   **characterised in** that
   - a laser of a wavelength of 0,5 to 2,0 μm is used,
   - the propagation axis of the laser beam is adjusted to coincide with the axis of symmetry of the hollow article with a maximum allowance of ± 10 mm,
   - the laser beam is directed from the interior of the hollow article through the internal layer to the external layer of the hollow article in order to achieve a phase change at the irradiated sites of the external layer,
   and
   - the laser beam is moved rotationally around the axis of symmetry and longitudinally along the axis of symmetry of the hollow article.

2. The method according to claim 1, characterised in that the laser beam is moved over the external layer of the hollow article in correspondence to the decor to be applied in a combined movement composed of a rotational movement around the axis of symmetry of the hollow article according to the equation

$$x^2(z) + y^2(z) = r^2(z)$$

and a longitudinal movement in the direction of the axis of symmetry of the hollow article according to the equation

z = f(t),

wherein are:

x(z) and y(z)

the x-coordinate or the y-coordinate, respectively, of the interaction site of the laser beam with the external layer of the hollow article in the plane z,

$r_1(z)$

the radius of the internal wall of the external layer in the plane z,

and

f(t)

a function increasing with time.

3. The method according to claim 1 or 2, characterised in that a mirror provided in the axis of symmetry of the hollow article which deflects the laser beam irradiated from the open side of the hollow article to its internal surface is rotated around and moved along the axis of symmetry of the hollow article in correspondence with the decor to be generated, without moving the hollow article.

4. The method according to one of claims 1 to 3, characterised in that the rotational and longitudinal movement of the laser beam is controlled by means of an optical pick-up device and/or by a microcomputer.

5. An apparatus for carrying out the method according to one of claims 1 to 4, comprising a laser, a focusing lens (5) and a mirror (6) arranged in the propagation axis of the laser beam (1), **characterised** in that

- the mirror (6) is arranged in the optical axis (4) of the lens (5),
- a support (8) carrying the mirror (6) is provided which is designed to be inserted into a hollow article (2) and to be adjusted such that the optical axis (4) of the lens (5) coincides with the axis of symmetry (3) of the hollow article within a predetermined accuracy with the axis of symmetry (3), preferably its rotational axis, and which is rotatable around and shiftable along the axis of symmetry (3) of the hollow article (2), so that the mirror is longitudinally or translatorily movable along and rotationally movable around the optical axis (4) of the lens (5),

- the support (8) is provided with driving means for the translatory movement,
- the lens (5) is provided with focusing means fixed to the support (8), and
- the mirror (6) and the lens (5) being independently longitudinally movable.

6. The apparatus according to claim 5, characterised in that the lens (5) and the mirror (6) are provided on the support (8).

7. The apparatus according to one of claims 5 or 6, characterised by a shutter for interrupting the laser beam (1) in accordance with the desired decor pattern to be applied to the hollow article (2).

8. The apparatus according to one of claims 5 to 7, characterised by an optical pick-up device generating electrical signals in correspondence with the respective decor sample and controlling the translatory and rotational movement of the support (8) and/or the mirror (6) and optionally the shutter.

9. The apparatus according to one of claims 5 to 8, characterised by a microcomputer controlling the translatory and rotational movement of the support (8) and/or the mirror (6) and optionally the focusing means of the lens (5), and optionally controlling the shutter.

**Patentansprüche**

1. Verfahren zur gezielten Erzeugung eines Dekors auf hohlen axial- und vorzugsweise rotationssymmetrischen Teilen mit einem Laserstrahl, wobei das hohle Teil aus zwei Schichten, einer inneren Schicht aus einem Material einer maximalen Dicke mit 40 mm mit einem maximalen Absorptionskoeffizienten von 29 % und einer äußeren Schicht aus einem Material einer maximalen Dicke von 1,2 mm mit einem minimalen Absorptionskoeffizienten von 75 %, besteht, dadurch **gekennzeichnet,** daß

- ein Laser einer Wellenlänge von 0,5 bis 2,0 $\mu$m verwendet wird,
- die Fortpflanzungsachse des Laserstrahls so ausgerichtet wird, daß sie mit einer maximalen Abweichung von ± 10 mm mit der Symmetrieachse des hohlen Teils zusammenfällt,
- der Laserstrahl aus dem Inneren des hohlen Teils durch die innere Schicht hindurch auf die äußere Schicht des hohlen Teils gerichtet wird, um eine Phasenänderung an den bestrahlten Stellen der äußeren Schicht hervorzurufen, und
- der Laserstrahl in einer Drehbewegung um die Symmetrieachse und in einer Längsbewegung entlang der Symmetrieachse des hohlen Teils bewegt wird.

2. Verfahren nach Anspruch 1, dadurch gekennzeichnet, daß der Laserstrahl gemäß dem aufzubringenden Dekor in einer zusammengesetzten Bewegung über die äußere Schicht des hohlen Teiles bewegt wird, wobei die zusammengesetzte Bewegung aus einer Drehbewegung um die Symmetrieachse des hohlen Teiles gemäß der Gleichung

$$x^2(z) + y^2(z) = r^2(z)$$

und einer Längsbewegung in Richtung der Symmetrieachse des hohlen Teils gemäß der Gleichung
   $$z = f(t)$$
besteht,
   worin bedeuten:
   $x(z)$ und $y(z)$
   die x- bzw. y-Koordinate, der Stelle der Wechselwirkung des Laserstrahls mit der äußeren Schicht des hohlen Teils in der Ebene z,
   $r_1(z)$
   den Radius der inneren Wand der äußeren Schicht in der Ebene z
   und
   $f(t)$
   eine mit der Zeit zunehmende Funktion.

3. Verfahren nach Anspruch 1 oder 2, dadurch gekennzeichnet, daß ein in der Symmetrieachse des hohlen Teils vorgesehener Spiegel, der den von der offenen Seite des hohlen Teils her eingestrahlten Laserstrahl an die innere Oberfläche reflektiert, gemäß dem zu erzeugenden Dekor ohne Bewegung des hohlen Teils in einer Drehbewegung um und in einer Längsbewegung entlang der Symmetrieachse des hohlen Teils bewegt wird.

4. Verfahren nach einem der Ansprüche 1 bis 3, dadurch gekennzeichnet, daß die Drehbewegung und die Längsbewegung des Laserstrahls mit einem optischen Aufnehmer und/oder einem Mikrocomputer gesteuert wird.

5. Vorrichtung zur Durchführung des Verfahrens nach einem der Ansprüche 1 bis 4, die einen Laser, eine Fokussierlinse (5) und einen in der Fortpflanzungsachse des Laserstrahls (1) angeordneten Spiegel aufweist,

dadurch **gekennzeichnet, daß**
   - der Spiegel (6)
     in der optischen Achse (4) der Linse (5) angeordnet ist,
   - ein den Spiegel (6) tragender Träger (8) vorgesehen ist, der so ausgebildet ist, daß er in ein hohles Teil (2) eingeführt und so eingestellt werden kann, daß die optische Achse (4) der Linse (5) mit einer vorgegebenen Genauigkeit mit der Symmetrieachse (3), vorzugsweise der Drehachse des hohlen Teils, zusammenfällt, und der um die Symmetrieachse (3) des hohlen Teils (2) herum drehbar und entlang dieser verschiebbar ist, so daß der Spiegel in Längsrichtung oder translatorisch entlang der optischen Achse (4) der Linse (5) und darum drehbar beweglich ist,
   - der Träger (8) für die translatorische Bewegung eine Antriebseinrichtung aufweist,
   - die Linse (5) eine am Träger (8) befestigte Fokussiereinrichtung aufweist, und
   - der Spiegel (6) und die Linse (5) unabhängig voneinander in Längsrichtung beweglich sind.

6. Vorrichtung nach Anspruch 5, dadurch gekennzeichnet, daß die Linse (5) und der Spiegel (6) auf dem Träger (8) vorgesehen sind.

7. Vorrichtung nach Anspruch 5 oder 6, gekennzeichnet durch eine Blende zur Unterbrechung des Laserstrahls (1) gemäß dem gewünschten, auf dem hohlen Teil (2) aufzubringenden Dekormuster.

8. Vorrichtung nach einem der Ansprüche 5 bis 7, gekennzeichnet durch einen optischen Aufnehmer, der gemäß dem betreffenden Dekormuster elektrische Signale erzeugt und die translatorische Bewegung und die Drehbewegung des Trägers (8) und/oder des Spiegels (6) und gewünschtenfalls der Blende steuert.

9. Vorrichtung nach einem der Ansprüche 5 bis 8, gekennzeichnet durch einen Mikrocomputer, der die translatorische Bewegung und die Drehbewegung des Trägers (8) und/oder des Spiegels (6) und gewünschtenfalls der Fokussiereinrichtung der Linse (5) und gewünschtenfalls der Blende steuert.

**Revendications**

1. Procédé de créaction sélective d'un décor sur des articles creux à symétrie axiale et, de préférence, circulaire au moyen d'un faisceau laser, où l'article creux est constitué de deux couches, d'une couche interne consistant en un matériau d'une épaisseur maximale de 40 mm ayant un coefficient d'absorption maximal de 29% et une couche externe consistant en un matériau d'une épaisseur maximale de 1,2 mm ayant un coefficient d'absorption minimale de 75%,

   caractérisé en ce que :

   on utilise un laser de longueur d'onde comprise entre 0,5 et 2,0 $\mu$m,

   on ajuste l'axe de propagation du faisceau laser de façon qu'il coïncide avec l'axe de symétrie de l'article creux à une tolérance maximale de ± 10 mm,

   on dirige le faisceau laser de l'intérieur de l'article creux vers la couche externe de l'article creux, à travers la couche interne, afin d'obtenir un déphasage au niveau des sites irradiés de la couche externe, et

   on déplace le faisceau laser circulairement sur l'axe de symétrie de l'article creux et longitudinalement le long de cet axe de symétrie.

2. Procédé selon la revendication 1, caractérisé en ce qu'on déplace le faisceau laser sur l'étendue de la couche externe de l'article creux en correspondance avec le décor à appliquer, suivant un mouvement combiné qui est composé d'un mouvement circulaire sur l'axe de symétrie de l'article creux, obéissant à l'équation :

$$x^2(z) + y^2(z) = r^2(z),$$

   et d'un mouvement longitudinal dans la direction de l'axe de symétrie de l'article creux, obéissant à l'équation :

   $$z = f(t),$$
   où :
   $x(z)$ et $y(z)$ sont respectivement la coordonée x et la coordonnée y du site d'interaction du faisceau laser avec la couche externe de l'article creux dans le plan z;
   $r_1(z)$ est le rayon de la paroi interne de la couche externe dans le plan z, et
   $f(t)$ est une fonction croissante du temps.

3. Procédé selon la revendication 1 ou 2, caractérisé en ce qu'on fait tourner sur l'axe de symétrie de l'article creux et qu'on déplace le long de cet axe de symétrie, en correspondance avec le décor à créer, un miroir disposé suivant l'axe de symétrie de l'article creux, lequel miroir fait dévier le faisceau laser irradié depuis le côté ouvert de l'article creux vers sa surface interne, ceci sans déplacer l'article creux.

4. Procédé selon l'une quelconque des revendications 1 à 3, caractérisé en ce qu'on commande le mouvement circulaire et le mouvement longitudinal du faisceau laser au moyen d'un dispositif capteur optique et, ou bien, d'un micro-ordinateur.

5. Appareil destiné à mettre en oeuvre le procédé selon l'une quelconque des revendications 1 à 4, comprenant :

   un laser, une lentille de focalisation (5) et un miroir (6) disposés suivant l'axe de propagation du faisceau laser (1),

   caractérisé en ce que :

   le miroir (6) est disposé suivant l'axe optique (4) de la lentille (5),

   un support (8) portant le miroir (6) est prévu, qui est conçu pour être inséré dans un article creux (2) et pour être ajusté de façon que l'axe optique (4) de la lentille (5) coïncide avec l'axe de symétrie (3) de l'article creux dans les limites d'une précision prédéterminée vis-à-vis de l'axe de symétrie (3), de préférence son axe de symétrie circulaire, et que l'on peut faire tourner sur l'axe de symétrie (3) de l'article creux (2) et déplacer le long de cet axe de symétrie, si bien que le miroir peut être déplacé longitudinalement ou en translation le long de l'axe optique (4) de la lentille (5) et peut être déplacé suivant un mouvement circulaire sur cet axe optique,

   le support (8) est doté d'un moyen d'entraînement relatif au mouvement de translation,

   la lentille (5) est dotée d'un moyen de focalisation fixé sur le support (8), et

   le miroir (6) et la lentille (5) peuvent être déplacés dans le sens longitudinal indépendamment l'un de l'autre.

6. Appareil selon la revendication 5, caractérisé en ce que la lentille (5) et le miroir (6) sont disposés sur le support (8).

7. Appareil selon l'une quelconque des revendications 5 et 6, caractérisé par un obturateur destiné à interrompre le trajet du faisceau laser (1) en fonction du motif de décoration voulu qui doit être appliqué à l'article creux (2).

8. Appareil selon l'une quelconque des revendications 5 à 7, caractérisé par un dispositif capteur optique qui produit des signaux électriques en correspondance avec l'échantillon respectif de décor et qui commande le mouvement de translation et le mouvement circulaire du support (8) et, ou bien, du miroir (6), ainsi que, en option, l'obturateur.

9. Appareil selon l'une quelconque des revendications 5 à 8, caractérisé par un micro-ordinateur qui commande le mouvement de translation et le mouvement circulaire du support (8) et, ou bien, du miroir (6) ainsi que, en option, du moyen de focalisation de la lentille (5) et qui commande en option l'obturateur.